# EUROPEAN PATENT SPECIFICATION

(11) **EP 0 470 198 B1**
(45) Date of publication and mention of the grant of the patent: **19.06.1996**
(21) Application number: 90908114.3
(22) Date of filing: 24.04.1990
(51) Int. Cl.: F02D 1/04, G05D 13/24

(54) **CENTRIFUGAL GOVERNOR**
ZENTRIFUGALREGELVORRICHTUNG
REGULATEUR CENTRIFUGE

(30) Priority: 27.04.1989 SE 8901559
(43) Date of publication of application: 12.02.1992
(73) Proprietor: SCANIA CV AKTIEBOLAG, S-151 87 Södertälje (SE)
(72) Inventor: MAGNUSSON, Göran, S-136 72 Haninge (SE)
(74) Representative: Goetz, Rupert, Dipl.-Ing.
(86) International application number: SE9000270
(87) International publication number: WO9012956

(56) References cited:
- EP-A- 0 296 358
- DE-A- 1 815 595
- DE-A- 3 120 088
- DE-C- 3 014 004
- US-A- 3 946 716

## Description

### TECHNICAL FIELD

The present invention relates to a centrifugal governor for a prime mover, preferably an internal combustion engine, with a damping device susceptible to influence the movement of an actuator rod.

### BACKGROUND ART

Centrifugal governors have been employed for many years within internal combustion engine technology. In, for example, the regulation of an injection pump for a diesel engine, resonance frequencies may be incorporated for torsional vibration determined primarily by the moment of inertia of the rotary masses included in the injection pump, by the torsional rigidity in shafts and couplings and also by the overall function and construction of the governor system proper. This implies that, at certain speeds, the engine will jerk since its output will vary in accordance with the oscillations.

EP-A-296 358 discloses a centrifugal governor for an internal combustion engine, with a damping device which influences the movement of an actuator rod, the damping device comprising a piston which is connected with the actuator rod and is disposed in a cylinder, said piston and said cylinder defining a first pressure medium chamber. Throttle means are provided in a first channel, which connects the first pressure medium chamber with a second pressure medium chamber.

DE-A-30 14 004 discloses a centrifugal governor for an internal combustion engine, with a damping device which influences the movement of an actuator rod, the damping device comprising a sleeve fitted on a piston, the sleeve being connected with the actuator rod, said piston and said sleeve defining a first pressure medium chamber. Throttle means are provided in a first channel which connects the first pressure medium chamber with a second pressure medium chamber.

The damping device avoids resonance frequencies incorporated in a governor system included in the internal combustion engine for governing an injection pump included in the engine.

Apparatuses have long been available in this Art for damping the oscillations in centrifugal governors. These generally operate hydraulically or frictionally. Attempts have also recently been made in the Art to damp such oscillations by electronic means. Frictional damping has proved to be less appropriate, since it creates an undesirable hysteresis effect on the governed engine speed. Prior art hydraulic dampers damp in both the increasing and decreasing throttle directions - by way of simplification hereinafter referred to as throttle-up and throttle-back. Since, hereby, throttle-back may be rendered difficult, the speed of the governed prime mover will race to dangerously high levels if the load on the engine suddenly disappears. This may, for instance, be the case if the prime mover is a diesel engine for vehicles in which the driving wheels suddenly slip on a skiddy surface.

### SUMMARY OF THE INVENTION

Using state-of-the-art apparatuses, throttle-up is too slow primarily from cold start and at large load increases. This is because of the cold damping oil present in the damper, which results in greater damping than normal. The present invention obviates this drawback and reduces damping of the throttle-up movement if the setting force exceeds a certain value but damps fully if the setting force is lower than the above-mentioned value.

To achieve this, the centrifugal governor according to claim 1 is proposed.

It has been noted that, in prior art governors of diesel engines, the engine may stall if throttle-back is abruptly engaged and if the damping is already operative at slight throttle-up, i.e. slight fuel supply volumes. Consequently, according to the present invention damping is reduced on throttle-up in the region between idling and fuel supply shut-off. Furthermore, the apparatus according to the present invention is characterised by simple and economic design. The damping device may be applied with but minor modifications to centrifugal governors in a number of various contexts.

### BRIEF DESCRIPTION OF THE ACCOMPANYING DRAWING

The nature of the present invention and its further aspects, aspects, advantages, and characterising features will be apparent from the appended Claims, the accompanying Drawing, and discussion of a preferred embodiment of the present invention with particular reference thereto. In the accompanying Drawing:

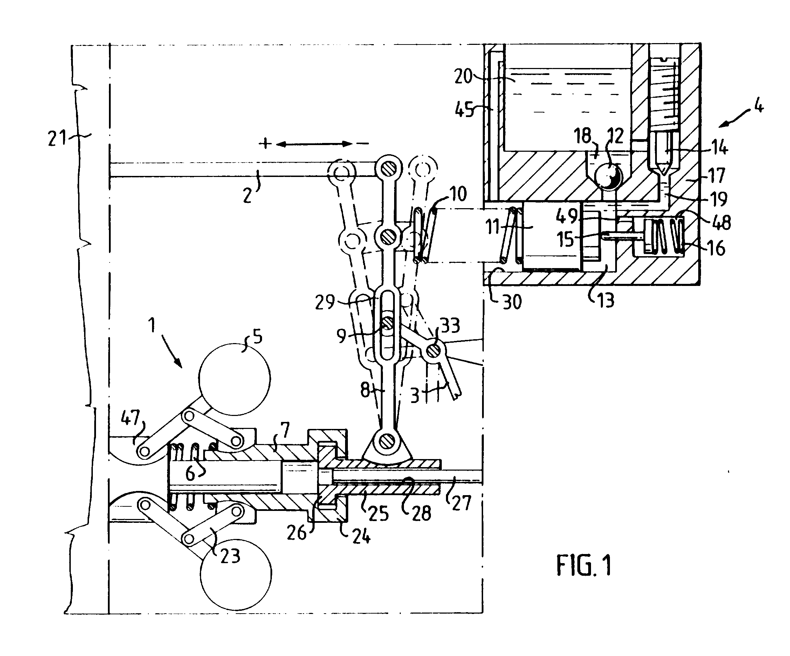

Fig. 1 schematically illustrates an embodiment of a centrifugal governor with a damping device according to the present invention adapted for regulating an injection pump in a diesel engine;

### DESCRIPTION OF PREFERRED EMBODIMENT

Referring to the Drawing, Fig. 1 shows a centrifugal governor 1 intended to govern a per se known injection pump 21 in a vehicle diesel engine. Two or more governor weights 5 are pivotally secured to a camshaft 47 included in the injection pump, in such a manner that, when the speed of the shaft 47 increases, they strive to increase their mass moment of inertia in relation to the shaft 47. The weights 5 are also connected, by linkages 23, to a first sleeve 7 coaxial with the shaft 47. The portion 24 of the sleeve 7 facing away from the weights 5 grasps about a flange 26 formed on a second sleeve 25 such that the second sleeve 25 accompanies the first sleeve 7 in its axial movement but not in its rotary movement. On its axial movement, the sleeve 25 slides on a permanently secured guide bolt 27 provided in a centre bore 28 drilled in the sleeve 25.

A governor arm 8 is pivotally secured at the sleeve 25 and, when the sleeve 7 moves, pivots about a guide pin 9 and displaces an actuator rod 2 pivotally connected to the governor arm 8. In the reciprocal movement, the actuator rod 2 revolves pump pistons included in the injection pump 21 for governing the injection volume of the pump (this operation is per se known in the Art and will not be described in greater detail here). In Fig. 1, an arrow to the left and a + sign indicate that the movement of the actuator rod to the left implies throttle-up, i.e. increased fuel supply, while its movement to the right is indicated by a corresponding arrow marked with a - sign which indicates throttle-back, i.e. reduced fuel supply. The governor arm 8 and actuator rod 2 are depicted by ghosted lines in a position for complete fuel supply shut-off, solid lines show a position for fuel supply for idling and broken lines depict the governor arm 8 and actuator rod 2 in an imaginary full-throttle position. The guide pin 9 is slidable in a guideway 29 disposed in the governor arm 8 and is secured to an accelerator arm 3 which is journalled at a point 33 fixed in relation to the injection pump 21 and is operated, for example, manually or, by the intermediary of stays, by an accelerator pedal or corresponding manually actuable means (not shown). As a result of the sliding capability of the guide pin 9 in the guideway 29, the gear ratio of the governor arm may be modified.

A damping device 4 is disposed at the lever of the governor arm 8 to which the actuator rod is secured. This damping device consists of a housing 17 with a cylindrical recess 30. A piston 11 is accommodated in this recess 30 and is, by the intermediary of a pre-tensioned extension spring 10, pivotally connected to the governor arm 8. The side of the piston 11 facing away from the spring 10 defines, together with the walls of the recess 30, a first pressure medium chamber 13. The damper 4 further includes single-acting damping means 12 and 18 which, in the embodiment according to Fig. 1, consist of a first channel 18 between the first pressure medium chamber 13 and a second pressure medium chamber 20, and a non-return valve 12 disposed in the channel 18 and closing when the piston 11 is retracted from the recess 30. Hydraulic oil is preferably employed as pressure medium. Hence, the single-acting function arises in that the movement of the piston is damped because of the closed non-return valve 12 when the piston is retracted, but that this movement is not damped when the piston 11 is protracted into the recess 30, since the non-return valve 12 then opens the channel 18 and allows the passage of fluid from the chamber 13 to the chamber 20. The non-return valve 12 is, in this instance, of the ball type, but may of course, be of any other per se known design. The channel 18 is sufficiently wide to occasion, on the throttle-back movement of the actuator rod 2, as slight a pressure drop as possible. An adjustable throttle 14 is disposed in a second channel 19 between the chambers 13 and 20. The chamber 20 is intended to maintain a certain oil level and is, therefore, continuously fed with oil from an oil pump in a manner not shown here. An abutment member 15 which is movable in the direction of movement of the piston 11 is also provided in the housing 17, the abutment member preferably being in the form of a stub shaft pretensioned by a spring 16 disposed in a third oil-fitted chamber 48. The strut 15 comes into contact with the side of the piston 11 facing away from the spring 10 and counteracts, via the spring 16, the inward movement of the piston in the recess 30. Oil supply to the chamber 48 is effected from the chamber 13 by the intermediary of a channel 49.

The apparatus shown in Fig. 1 functions as follows. It will, in this instance, be presupposed that the accelerator arm 3 operable by the vehicle driver remains at a certain setting and the purpose of the governor is to ensure that an engine speed corresponding to this position is maintained as far as is possible.

Under load, it is often desirable that the engine work at an engine speed corresponding to a so-called full-throttle position on the actuator rod 2, depicted in Fig. 1 by a broken line. If, in such instance, the load on the engine increases, the speed of the engine decreases and the governor weights 5 are drawn in towards the shaft 47 by the spring 6. The sleeve 7 then moves to the right so that the governor arm 8 is revolved counter-clockwise about the guide pin 9 and urges the actuator rod 2 in the throttle-up direction to the left, with a view to readjusting the engine speed to the initial level. At the same time, the governor arm 8 strives to entrain the piston 11 in the damping device 4 by the intermediary of the pre-tensioned extension spring 10. When the piston 11 moves to the left and the non-return valve 12 is closed, a partial vacuum arises in the chamber 13 and a pressure drop occurs across the adjustable throttle 14. The force generated by the partial vacuum damps the throttle-up movement of the actuator rod 2 which thereby positively acts for re-establishment of the initial engine speed, with a view to avoiding the occurrence of oscillations in the regulation. The size of the damping force is determined by the speed of movement of the piston and the setting of the throttle 14.

If, at desired full throttle, the load on the engine were instead to be reduced, the engine speed increases and the governor weights 5 move outwardly. In such an event, the sleeve 7 moves to the left so that the governor arm 8 is revoived clockwise about the guide pin 9 and draws the actuator rod 2 in the throttle-back direction to the right, with a view to reducing engine speed towards its initial value. The governor arm 8 strives to urge the piston 11 in the damping device 4 to the right. The non-return valve 12 then opens the channel 18 between the two chambers 13 and 20, so that the movement of the piston 11 is not damped, whereby the throttle-back effect may rapidly be translated into a reduction of the engine speed to initial level so that the risk of excessively high engine speeds is avoided. By such means will single-action damping in the throttle-up direction have been achieved.

Moreover, the single-acting devices (12,18) included in the damping device may consist of a plurality of channels each with one non-return valve means.

In order that fuels supply may reliably be shut-off completely, the actuator rod 2 may move a short distance to the right-hand end position represented by ghosted lines once the fuel volume has been adjusted down to zero. In snap throttle-back, it may happen that the actuator rod 2 unintentionally moves to this right-hand end position. Without an arrangement according to the present invention, there would then be a risk of the engine having time to stall, since the piston 11 would damp a subsequent throttle-up from the right-hand end position to that position where fuel begins to be supplied. Therefore, the abutment member 15 counteracts the damping in that it strives to urge the piston 11 to the left when the actuator rod 2 is located between the right-hand end position and that position where fuel begins to be supplied. Hereby, the above-mentioned risk of unintentional stalling may be substantially eliminated.

When the throttle-up force exceeds the pre-tensioning force in the spring 10 so that this begins to stretch, rapid throttle-up takes place despite damping from the piston 11. This is of importance, for instance in cold engine start when the damping is large because of the high viscosity of the oil. When the throttle-up force is less than the pre-tensioning force of the spring 10, the spring 10 acts as rigid link and the actuator rod 2 follows the normal damped movement of the piston 11.

## Claims

1. A centrifugal governor (1) for a prime mover, preferably an internal combustion engine, with a damping device (4) susceptible to influence the movement of an actuator rod (2) connected to the centrifugal governor (1), wherein a piston (11) included in the damping device (4) and connected to the actuator rod (2) is disposed in a recess (30) and defines a first pressure medium chamber (13); throttle means (14) being provided in a first channel (19) between the first pressure medium chamber (13) and a second pressure medium chamber (20); wherein a single acting device (12, 18) included in the damping device (4) consists of a second channel (18) with a non-return valve (12) disposed therein, closing when the piston (11) is retracted from the recess (30) and opening during a movement of the piston (11) corresponding to a throttle back direction; said channel (18) connecting the first and second pressure medium chambers (13, 20) with each other, and the second pressure medium (20) maintains a certain level of pressure medium; the damping device (4) being intended to avoid resonance frequencies incorporated in a governor system included in the internal combustion engine for governing an injection pump included in the engine, and influences substantially only the throttle-up movements of the actuator rod (2) by the intermediary of said single-acting device (12, 18) included in the damping device, characterized in that the damping device (4) is provided with an abutment member (15) movable in the direction of the piston (11), pretensioned by a first spring (16), which reduces the damping if the throttle-up movement of the actuator rod (2) takes place from a position in the interval between an idling position and a position for fuel supply shut-off.

2. The centrifugal governor as claimed in Claim 1, characterized in that the damping device (4) is also provided with a second spring (10) secured at the side of the piston (11) facing away from the first chamber (13), which reduces the damping of throttle-up movement of the actuator rod (2) if the throttle-up movement takes place rapidly with a large setting force exceeding a certain level, said spring (10) compressed with a setting force less than said certain level connects the damping device with the actuator rod (2) such that the piston (11) follows the actuator rod under normal damped movement.

3. The centrifugal governor as claimed in Claim 2, characterized in that the second spring (10) acting on large throttle-up forces representing snap throttle-up, as an extension spring, but otherwise as a rigid link.

4. The centrifugal governor as claimed in any one of Claims 1 or 2, characterized in that the throttle means (14) in said first channel (19) between the first pressure medium chamber (13) and the second pressure medium chamber (20) is adjustable so as to increase or decrease fluid flow through said first channel (19).

5. The centrifugal governor as claimed in any one of Claims 1 or 2, characterized in that the single-acting device (12, 18) included in the damping device (4) consists of a plurality of channels each with non-return valve means.

## Patentansprüche

1. Zentrifugalregelvorrichtung (1) für eine Kraftmaschine, vorzugsweise eine Verbrennungskraftmaschine, mit einem Dämpfer (4), der die Bewegung einer mit der Zentrifugalregelvorrichtung (1) verbundenen Betätigungsstange (2) zu beeinflussen vermag, wobei ein im Dämpfer (4) enthaltener und mit der Betätigungsstange (2) verbundener Kolben (11) in einer Vertiefung (30) angeordnet ist und eine erste Druckmediumkammer (13) begrenzt, eine Drosseleinrichtung (14) in einem ersten Kanal (19) zwischen der ersten Druckmediumkammer (13) und einer zweiten Druckmediumkammer (20) vorgesehen ist, eine im Dämpfer (4) enthaltene einfachwirkende Vorrichtung (12, 18) einen zweiten Kanal (18) mit einem darin angeordneten Rückschlagventil (12) umfaßt, sich beim Herausziehen des Kolbens (11) aus der Vertiefung (30) schließt und während einer Bewegung des Kolbens (11), die einer Richtung zur Leerlaufstellung entspricht, öffnet, der Kanal (18) die erste mit der zweiten Druckmediumkammer (13, 20) verbindet, und die zweite Druckmediumkammer (20) ein bestimmtes Druckmediumniveau bewahrt, der Dämpfer (4) dazu bestimmt ist, Resonanzfrequenzen in einem in der Verbrennungskraftmaschine enthaltenen Reglersystem zur Steuerung einer im Motor enthaltenen Einspritzpumpe zu vermeiden, und im wesentlichen nur die Bewegungen der Betätigungsstange (2) in richtung zur Vollaststellung über die genannte, im Dämpfer enthaltene einfachwirkende Vorrichtung (12, 18) beeinflußt,
dadurch **gekennzeichnet**, daß
der Dämpfer (4) mit einem Anschlagglied (15) versehen ist, das in der Richtung des Kolbens (11) beweglich, durch eine erste Feder (16) vorgespannt ist, welches die Dämpfung verringert, wenn die Bewegung der Betätigungsstange (2) in Richtung zur Vollaststellung aus einer Stellung zwischen einer Leerlaufstellung und einer Kraftstoffabschaltstellung heraus stattfindet.

2. Zentrifugalregelvorrichtung nach Anspruch 1,
dadurch **gekennzeichnet**, daß
der Dämpfer (4) ferner mit einer zweiten Feder (10) versehen ist, die auf der der ersten Kammer (13) abgewandten Seite des Kolbens (11) angeordnet ist, die Dämpfung der Bewegung der Betätigungsstange (2) in Richtung zur Vollaststellung verringert, wenn die Bewegung in Richtung zur Vollaststellung rasch mit einer großen, ein bestimmtes Niveau überschreitenden Einstellkraft ausgeführt wird, wobei die Feder (10), die mit einer kleineren Einstellkraft als dem genannten bestimmten Niveau zusammengedrückt ist, den Dämpfer mit der Betätigungsstange (2) so verbindet, daß bei normaler gedämpfter Bewegung der Kolben (11) der Betätigungsstange folgt.

3. Zentrifugalregelvorrichtung nach Anspruch 2,
dadurch **gekennzeichnet**, daß
die zweite Feder (10) bei großen, in Richtung zur Vollaststellung wirkenden Kräften, die ein sehr rasches Erreichen der Vollaststellung darstellen, als Zugfeder, jedoch sonst als starres Verbindungsglied wirkt.

4. Zentrifugalregelvorrichtung nach einem der Ansprüche 1 und 2,
dadurch **gekennzeichnet**, daß
die Drosseleinrichtung (14) im ersten Kanal (19) zwischen der ersten Druckmediumkammer (13) und der zweiten Druckmediumkammer (20) einstellbar ist, um den Fluidstrom durch den ersten Kanal (19) zu vergrößern oder zu verkleinern.

5. Zentrifugalregelvorrichtung nach einem der Ansprüche 1 und 2,
dadurch **gekennzeichnet**, daß
die im Dämpfer (4) enthaltene einfachwirkende Vorrichtung (12, 18) eine Vielzahl von Kanälen je mit einem Rückschlagventil umfaßt.

## Revendications

1. Régulateur centrifuge (1) pour une machine motrice, de préférence pour un moteur thermique, comprenant un appareil amortisseur (4), susceptible d'influencer le mouvement d'une tige de commande (2) associée au régulateur centrifuge (1), régulateur dans lequel un piston (11), compris dans l'appareil amortisseur (4) et relié à la tige de commande (2), est disposé dans une cavité (30) et limite une première chambre de milieu de pression (13), un dispositif étrangleur (14) est prévu dans un premier canal (19) situé entre la première chambre de milieu de pression (13) et une seconde chambre de milieu de pression (20), un dispositif à simple effet (12, 18), contenu dans l'appareil amortisseur (4), consiste en un second canal (18), muni d'une soupape de non-retour (12) y installée, ce dispositif se fermant lorsque le piston (11) est retiré de la cavité (30) et s'ouvrant pendant un mouvement du piston (11) correspondant à une direction vers la position de ralenti, ledit canal (18) relie la première et la seconde chambre de milieu de pression (13, 20) l'une à l'autre, et la seconde chambre de milieu de pression (20) conserve un certain niveau du milieu de pression, l'appareil amortisseur (4) étant destiné à éviter des fréquences de résonance incorporées dans un système de régulation contenu dans le moteur thermique pour réguler une pompe d'injection comprise dans le moteur, et contrôle sensiblement seulement les mouvements de la tige de commande (2) dans la direction de la position de pleine charge par l'intermédiaire dudit dispositif à simple effet (12, 18) contenu dans l'appareil amortisseur,
**caractérisé** en ce que
l'appareil amortisseur (4) est muni d'une pièce de butée déplaçable dans la direction du piston (11), sollicité par un premier ressort (16), qui réduit l'amortissement si le mouvement de la tige de commande (2) dans la direction de la position de pleine charge s'effectue à partir d'une position intermédiaire entre une position de ralenti et une position de coupure d'amenée de carburant.

2. Régulateur centrifuge selon la revendication 1,
**caractérisé** en ce que
l'appareil amortisseur (4) est en outre muni d'un second ressort (10) qui, arrangé sur le côté opposé du piston (11) par rapport à la première chambre (13), réduit l'amortissement du mouvement de la tige de commande (2) dans la direction de la position de pleine charge si le mouvement dans la direction de la position de pleine charge s'effectue rapidement avec une grande force d'ajustage dépassant un certain niveau, ledit ressort (10), comprimé par une force d'ajustage inférieure au certain niveau indiqué, relie l'appareil amortisseur à la tige de commande (2) de telle manière que le piston (11) suit la tige de commande dans un mouvement amorti normal.

3. Régulateur centrifuge selon la revendication 2,
**caractérisé** en ce que
dans le cas de forces importantes, dirigées dans la direction de la position de pleine charge, représentant une réalisation très rapide de la position de pleine charge, le second ressort (10) agit comme un ressort de tension, mais comme un joint rigide dans les autres cas.

4. Régulateur centrifuge selon une quelconque des revendications 1 et 2,
**caractérisé** en ce que
le dispositif étrangleur (14), situé dans le premier canal (19), entre la première chambre de milieu de pression (13) et la seconde chambre de milieu de pression (20), est ajustable afin d'augmenter ou de réduire le courant de fluide parcourant ledit premier canal (19).

5. Régulateur centrifuge selon une quelconque des revendications 1 et 2,
**caractérisé** en ce que
le dispositif à simple effet (12, 18), compris dans l'appareil amortisseur (4), consiste en une multitude de canaux chacun muni d'une soupape de non-retour.
